# EUROPEAN PATENT SPECIFICATION

(11) **EP 3 729 762 B1**
(45) Date of publication and mention of the grant of the patent: **02.12.2026**
(21) Application number: 17847796.4
(22) Date of filing: 19.12.2017
(51) Int. Cl.: H04L 9/40

(54) **DOUBLE FACTOR, ASYNCHRONOUS AND ASYMMETRIC AUTHENTICATION SYSTEM AND METHOD FOR ACCESSING A COMPANY SERVER THROUGH INTERNET PROTOCOL**
DOPPELFAKTOR, ASYNCHRONES UND ASYMMETRISCHES AUTHENTIFIZIERUNGSSYSTEM UND VERFAHREN ZUM ZUGRIFF AUF EINEN FIRMENSERVER ÜBER EIN INTERNETPROTOKOLL
SYSTÈME D'AUTHENTIFICATION ASYNCHRONE ET ASYMÉTRIQUE À DOUBLE FACTEUR ET PROCÉDÉ D'ACCÈS À UN SERVEUR DE SOCIÉTÉ PAR LE BIAIS D'UN PROTOCOLE INTERNET

(43) Date of publication of application: 28.10.2020
(73) Proprietor: Lateralcode S.r.L., 00165 Roma (RM) (IT)
(72) Inventor: ORSINI, Stefano, 00148 Roma (IT)
(74) Representative: Manna, Sara
(86) International application number: PCT/IT2017/000281
(87) International publication number: WO 2019/123486

(56) References cited:
- KR-B1- 100 407 603
- US-B1- 6 463 474
- AMON OTT: "Rule Set Based Access Control (RSBAC) Linux Kernel Security Extension Linux Kongress 2004 -One Day Workshop", 31 December 2004 (2004-12-31), XP055501143, Retrieved from the Internet <URL:https://rsbac.m-privacy.de/doc/media/lk2004-tutorial-handout.pdf> [retrieved on 20180821]

## Description

### Technical field of the invention

The present invention relates to a system and a method for enabling the remote access to one or more business or company server by means of Internet computer network. In particular, the system can be defined as a double factor, asynchronous and asymmetric authentication system.

The invention allows to manage safely the accesses to sites and/or company Applications from outside, by authorized users.

### Background

In the field of the access to company applications from outside through Internet network, problems have always noticed to succeed in guaranteeing the systems' protection from cyber-attacks (brute force attack, DDoS, sql injection, etc.).

As far as the company service access is concerned, nowadays there are no solutions capable of guaranteeing a high level of inviolability in front of a simple architecture and access mode by the user. Moreover, generally the proposed solutions are not versatile, and they require intense modifications to allow the adaptation thereof to different operation and application systems.

In fact, in the field of the computer security there are simple access methods, which implement weak protection systems, or robust protection systems, which request complex access methods. In other words the traditional solutions are too complicated and very safe, or very simple and unsafe.

Generally, the modes for accessing servers and company applications, by the users connected to the Internet network, take place in the following two modes: by contacting directly the server/application by means of its public IP or by means of a VPN tunnel which, in reality, creates an encrypted channel between the user and the server/application.

In particular, security of access systems is damaged by the fact that the company servers, in order to publish the services towards outside, have to open necessarily the corresponding connection ports (3389 for rdp, 22 for ssh, 21 for ftp, 80 for http, etc.) and they have to do it, in order to be able to be reached by any part of the world for all IP addresses therefrom the request arrives.

Even in case wherein a VPN connection is used, the access systems of traditional type always require to expose a port towards outside (then it may be attacked by DDoS and so on). Moreover, constraining the access to company applications exclusively by devices provided with a VPN client is limiting and it has consequences, in terms of management and operation, which in the long term would make the way of working complex, little flexible and low-functioning.

The fact itself of exposing the connection ports makes the systems of traditional type vulnerable to attacks by cracker, allowing not authorized people to access reserved information or to make not accessible the servers/applications/VPN following a saturation of requests (DOS, dDOS, etc.).

US6463474B1 discloses a system provided with authentication and authorization proxy mechanisms, for firewalls that protect networks.

KR100407603B1 describes an authentication and security system of Windows media server, which operates a web site providing movies and live broadcast viewing services.

### Summary of the invention

The technical problem placed and solved by the present invention is therefore to provide a system and a method for controlling the remote access to a server by means of the computer network, by allowing to obviate the drawbacks mentioned above with reference to the known art.

Such problem is solved by a system according to claim 1 and by a method according to claim 7.

Preferred features of the present invention are set forth in the dependent claims.

The proposed invention provides a system and a method implementable by means of such system, which allow to manage in safe manner the control of the accesses to a server (hereinafter even target server), such as for example a server, an apparatus or a company application. By means of the system and the method of the invention the access to the target server exclusively to authorized users is guaranteed, even if an extremely simple, effective access mode is maintained, independent from the device used by the user to perform the access, that is by the IP of the user. The IP address identifies univocally the device (host) therewith the user U1 is connected to the computer network.

One of the problems underlying the invention consists in that a target server, since it cannot know in advance the IP address of the authorized user, necessarily has to allow any IP address to connect.

The method of the invention substantially allows to implement the advantages enlisted hereinafter:
- allowing the user to perform a first authentication by means of a verification server physically and logically remote from the target server, with the purpose of not being traced back in any way to the target server itself (asymmetry feature of the invention); and
- allowing the target server of being visible exclusively to the IP addresses of the users which have previously authenticated with the verification server, exclusively for a limited period of time, for example of few seconds (asynchrony feature of the invention).

The just described two features represent the security double factor of the invention.

In other words, the system of the invention adds the IP address of the user to the access rules (Access Control List) of the target server.

The invention provides that, once ended the first step of authorizing to the verification server, the user could establish a session for accessing the target server by authenticating according to the classical modes provided by the same, within and not beyond a limited time period. Such authentication to the target server takes place by means of interface means provided by the invention itself. Once finished the limited time period to perform the access, the interface means 'forgets' the IP address of the user, and authorizes exclusively to keep the ongoing, previously established, sessions.

The user then performs two actions in sequence to access the target server safely: a first authentication to the system of the invention (verification server), by means of first access credentials, and a subsequent access to the target server by means of an interface having its own access modes of the target server itself. Typically, even these last modes include a user authentication. Of course, the user credentials to access the verification server preferably are different from the user credentials to authenticate to the interface of the target server.

It can be appreciated that the method for controlling the access implemented by the present invention is extremely safe since the user has to know the address of the verification server, and the related authentication credentials, and even the address of the target server and its different access credentials. For example, if even a cracker obtained the address and credentials to access the system of the invention (verification server), he/she should know even the address, the access port and the credentials of the target server and he/she should perform these procedures in sequence and within a time period of few seconds.

Moreover, advantageously, the proposed system is clientless and it can integrate with software already existing in the different devices for accessing the several company servers (target server).

The complexity and heterogeneity of the available devices (computer, smartphone, tablet with different Operating Systems often not compatible therebetween) and of the target servers (meant as company applications, device of any nature), do not represent an obstacle nor a limitation to the operativity of the present invention.

Still, the proposed solution is compatible with any communication protocol based upon Internet Protocol (IP).

Other advantages, features and use modes of the present invention will result evident from the following detailed description of some embodiments, shown by way of example and not for limitative purposes.

### Brief description of the figures

The enclosed Figures, shown only by way of example, will be referred to in the following discussion, wherein:
- Figure 1 shows a first preferred embodiment of a system according to the present invention; and
- Figures 2 and 2A show a first and a second portion, respectively, of a flow diagram related to a preferred embodiment of a method according to the present invention.

### Detailed description of preferred embodiments

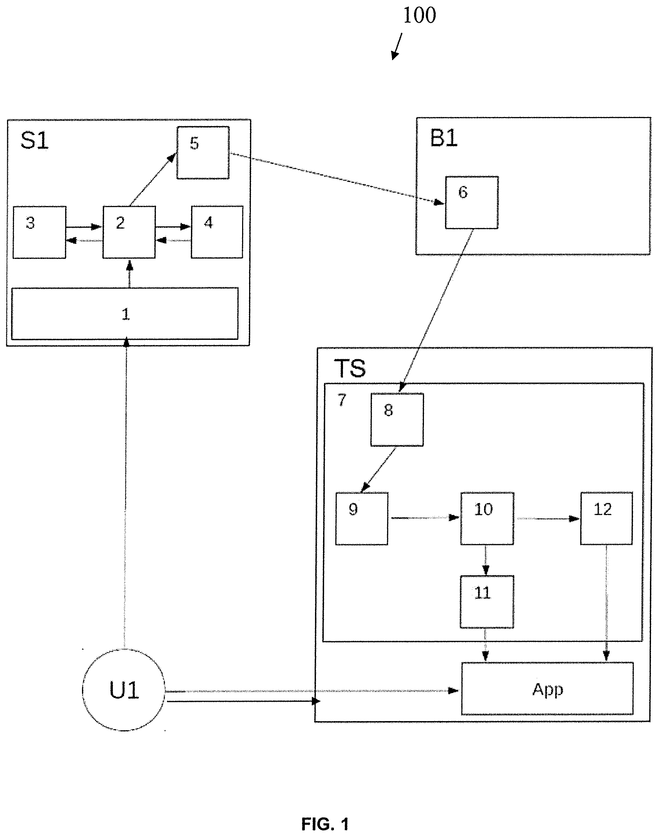

A first preferred embodiment of the invention system is schematically represented in Figure 1, wherein it is designated as a whole with 100.

In the following example, it is considered that the network for which a system for controlling the access is implemented is a business network, in particular for accessing a company App, therefore hereinafter one will speak about access to a target server such as a company server.

By purely way of example, Figure 1 shows one single user designated with U1, authorized to access a respective target server designated with TS, a first server or "verification server" S1. A second server B1 - hereinafter even defined as "message broker" - interposed between the verification server S1 and authorization means 7 of the access to the target server TS. The first server S1 and the second server B1 are physically and logically separated with respect to the target server.

In particular, the system 100 is configured to allow the control of the access to the target server SO by the respective user U1.

The verification server S1 is configured to allow the user U1 to enter first access credentials for his/her authentication. Such credentials can include a first alpha-numerical security encrypted code and/or a first password.

The verification server S1 comprises: an interface for entering credentials 1, for example a dedicated Web page, control means 2 implementing logics for controlling the credentials entered by the user, a first database 3 wherein access credentials of authorized users are stored, means 4 for acquiring the IP address therefrom the user U1 is connected, in particular a module for acquiring the IP address implementable according to techniques of known type, means for transmitting or more specifically a module for sending messages 5 configured for transmitting the acquired IP addresses to the second server B1, as it will be explained more in details hereinafter. The IP addresses sent by the module for sending messages 5 can be included in encrypted messages.

The acquisition means 4 is configured for acquiring the IP of the user U1 once the latter has authenticated successfully on the first server S1. Such acquisition means 4 typically has software nature and its implementation is to be considered within the comprehension of a person skilled in the art.

Moreover, the broker B1 includes reception and transmission means 6, in particular a reception/transmission module, configured for receiving and forwarding, preferably automatically, IPs - in particular of the encrypted messages- transmitted by the means 5 to the authorization means 7 connected to the target server TS. The functionality implemented by the reception and transmission means 6 is substantially that of sorting out the encrypted messages sent by the verification server S1 towards the target servers TS associated to the authenticated users. The second server B1 can be accessed exclusively by means of the verification server S1.

The authorization means 7 is apt to interact with the logics for controlling the accesses of the target server TS itself to impose specific rules, or in particular it can implement an interface for accessing directly the target server TS. The authorization means 7 can be implemented by means of software or hardware components.

By way of example, Figure 1 shows that the user U1 accesses an App of the target server TS, wherein the access rules of the target server TS are imposed by the authorization means 7.

The authorization means 7 comprises reception means 8, configured for receiving the IPs acquired by the reception and transmission means 6. The reception and transmission means 6 preferably is programmed for transmitting automatically the acquired IP addresses to the authorization means 7, for example by means of a channel protected by encryption. Of course, the reception and transmission means 6 is programmed for sending the acquired IP address to the reception means 8.

Moreover, the authorization means 7 comprises a second temporary database 10 wherein the IP addresses received by B1 are stored, related to the users which have performed the access to the first server S1 and which are authorized to access the specific target server TS wherein the same authorization means 7 is installed. The IP addresses are stored in the second temporary database 10 for a predetermined time period AT, thereafter they are cancelled from the second temporary database 10.

The authorization means 7 can lie physically in the target server TS or on another still additional server, based upon the features of the target server TS.

The authorization means 7 can include a timer for counting the time wherein the received IP addresses have to be kept in the list of authorized IPs 10. In particular, a timer module for expiry of IP addresses 11 and a timer module of active sessions 12 can be provided, as shown in the preferred embodiment of Figure 1.

Advantageously, the fact that the broker server of the messages B1 is positioned outside the first server S1 allows to avoid that a cracker succeeding in accessing the first server S1 could even access the broker server of the messages B1, wherein among other things no piece of information on the target server TS is stored.

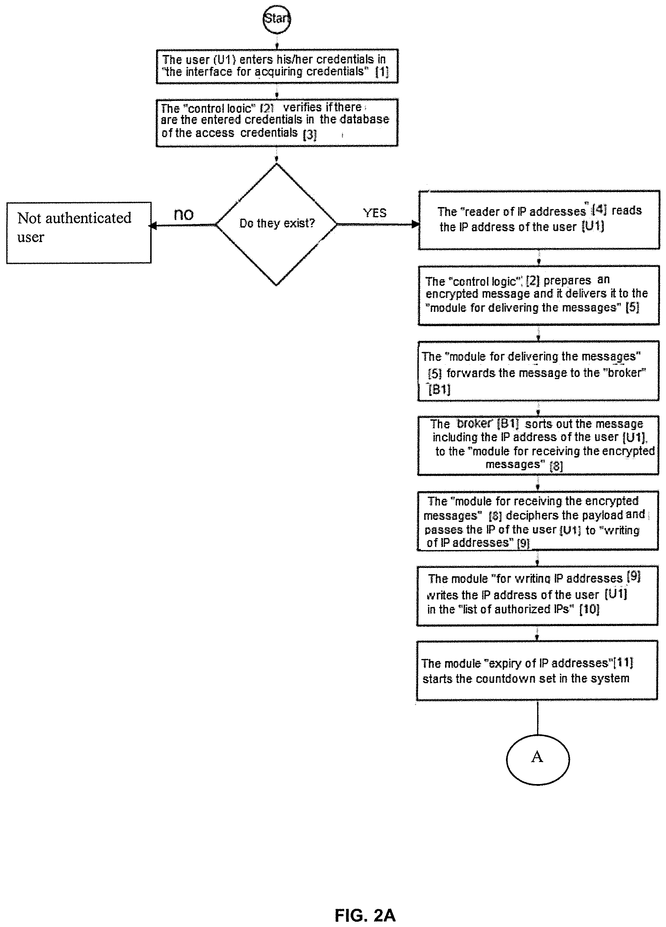

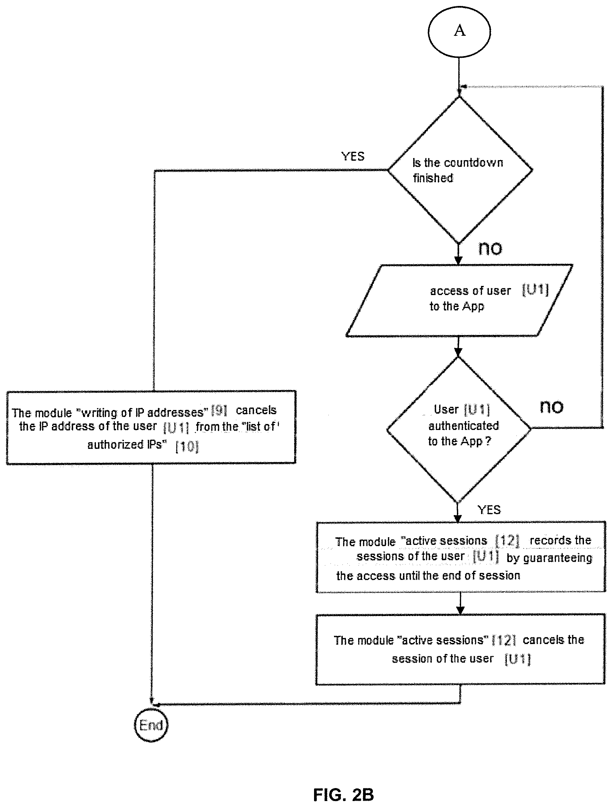

By way of example, hereinafter the logics are described underlying the modes of a user U1 for accessing a respective target server TS by means of a preferred embodiment of the system 100 of the present invention, according to what illustrated by the flow diagrams of Figures Figure 2A and 2B.

The user U1 enters his/her owns credentials in the interface of the first server S1. The control means 2 verifies that the entered credentials are present in the first database 3 of the access credentials.

If such credentials are not present in the first database 3, the control means 2 does not allow the user authentication. On the contrary, if the credentials are present in the first database 3, the control means 2 allows the authentication of the user U1.

This implies that, automatically, the acquisition means 4 acquires the IP address therefrom the user U1 is connected. Still automatically, the module for sending messages 5 transmits the acquired IP address to the second server B1, for example by means of an encrypted message.

Once the message including the IP address of the user U1 is received by the second server B1, this transmits the IP of the user U1 by means of a port thereat the respective authorization means 7 is listening, based upon the association of the user U1 with the authorization means 7 (and thus with the respective target server TS).

The IP received by the reception means 8 of the authorization means 7 is stored in the second temporary database 10 by means of a module for writing the IP addresses, designated with 9 in Figure 1.

The second temporary database 10 implements a list of IPs temporarily authorized to access the target server SO. The authorization means 7 can further include a timer module 11 for expiry of IP addresses, which starts to count the time when the IP address is stored in the second temporary database 10. When the timer module 11 counts a period of time which is equivalent to a predetermined time interval AT, the IP address is cancelled from the second temporary database 10.

In particular, the authorization means 7 is programmed to implement or impose rules for accessing the target server TS. Such rules provide that, in a certain moment, exclusively the IP addresses currently present in the second temporary database 10 are authorized to access the target server TS and only during the predetermined time interval AT wherein they are stored in the same second temporary database 10.

Moreover, a timer module of the active sessions 12 counts the time in which a session established between a user U1 and the respective target server TS is active. As long as the session is active it is maintained, even if the IP address therefrom the user is connected is cancelled from the second temporary database 10.

The predetermined period of time AT preferably is a short period of time, example less than 60 seconds, preferably equal to 20 seconds.

It is stated again that the user U1 is authorized to access the target server TS only by the IP address therewith he/she accessed the first server S1.

From the moment in which the IP is stored in the second temporary database 10, the user U1 can directly access the target server TS through said authorization means 7 which, after occurred authentication, will address him/her to the real company application.

If the access by the user U1 to the target server TS takes place within time AT, and by the same IP temporarily stored in the list of authorized IPs (temporary database 10), the user U1 then will obtain the access to the target server TS.

Advantageously, as already said, it can be provided that, if the session established by the user U1 with the target server TS is still ongoing upon expiring the predetermined period of time AT, the session is automatically kept active by the target server TS, but the IP of the connected user U1 in any case is cancelled from the second temporary database 10. This involves that, when the current session is interrupted, the user U1 will have to perform again the authentication by means of the first server S1 to be authorized again to access the target server TS, even if by the same IP used previously.

According to preferred embodiments of the invention, the first server S1 implements a Web platform by means of a daemon process insulated in a chroot jail (linux), which publishes a https/TLS encrypted web page for entering the security codes by the users. Preferably, the user access credentials include a security code. When the user U1 enters the security code for accessing the first server S1, the security code hash is compared to a series of hashes stored in the first database 3 in association to users authorized for accessing the target server. If a correspondence between the security code hash and the store hash is verified, the IP address of the user U1 is acquired and sent by means of encrypted message to the authorization means 7. The authorization means 7 is programmed to allow a IP address to access ports, protocols and specific services published inside the server TS itself or of other company servers.

A preferred configuration of the authorization means 7 can provide the formation of two list types of authorized IPs: ephemeral lists (set to expire after few seconds), mainly used for services of stateful type, or daily lists (cancelled daily, preferably during the night) mainly used for services of stateless type.

According to a preferred embodiment of the invention, the authorization means 7, connected to the target server TS (company server), receives in real time the IP address of the user U1 from the second server B1 and inserts it in an ephemeral list (with expiry time set by the system administrator - generally 20 seconds of default). The user U1, soon after entering the access credentials in the first server TS directly accesses the company IP (or his/her related FQDN, where the abbreviation FQDN means Fully Qualified Domain Name, and it refers to a not ambiguous domain name which specifies the absolute position of a node inside the DNS hierarchy tree), for example he/she authenticates to a company Application or accesses a company portal.

As already shown above, the authorization means 7 can be integrating portion of the target server TS.

Alternatively, the authorization means 7 can be implemented by a specific dedicated hardware which in turn implements a server function which the second temporary database 10 of authorized IPs has temporarily and which performs a re-addressing of the connection established by the user U1 to the company application, when the user (or better his/her IP) is recognized as authorized.

The present invention has been sofar described with reference to preferred embodiments. It is to be meant that other embodiments belonging to the same inventive core may exist, as defined by the protective scope of the herebelow reported claims.

## Claims

1. A system (100) for controlling the access to one or more target server (TS) by one or more users (U1) through internet network, comprising:
- a first server (S1), configured to allow a user (U1) to enter first access credentials and comprising:
i. a first database (3) of first access credentials of users (U1) authorized to access said first server (S1);
ii. means (4) for acquiring an IP address, programmed for acquiring an IP address therefrom the user (U1) is connected if the first access credentials entered by the user (U1) correspond to said first access credentials stored in said first database (3);
iii. transmission means (5), programmed for transmitting data including said IP address to a second server (B1);
said second server (B1), connected to said first server (S1), comprising reception and transmission means (6) apt to receive from said first server (S1) the IP address which has been acquired and to make available automatically said IP address to respective authorization means (7);
said authorization means (7) being connected to a respective target server (TS) and programmed for:
• storing automatically said IP address made available by said second server (B1) in a second temporary database (10), and
• deleting said IP address from said second temporary database 10 after a predetermined time interval (AT),
wherein said authorization means (7) is further programmed for authorizing exclusively access requests to the respective target server (TS) coming from IP addresses stored in said second temporary database (10), and exclusively during said predetermined time interval (AT) wherein said IP addresses are stored in said second temporary database (10),
wherein said first server (S1) and second server (B1) are physically and logically separated with respect to target server (TS),
wherein the second server (B1) is interposed between the first server (S1) and said authorization means (7), so that said first server (S1) is not directly connected with the target server (TS),
wherein said authorization means (7) physically lies in another additional server.

2. The system (100) according to claim 1, wherein said authorization means (7) is configured so that, when said predetermined time interval expires, if a connection established by the user (U1) authorized to access the target server (TS) with a respective target server (TS) is ongoing, the connection is automatically maintained active, whereas said IP address of such user (U1) is cancelled from said second temporary database (10).

3. The system (100) according to one of the preceding claims, wherein said predetermined time interval (AT) is comprised between 10 and 30 seconds and however it can be configured.

4. The system (100) according to the preceding claim, wherein said authorization means (7) comprises a first timer (11) for counting said predetermined time interval (AT) wherein said IP addresses are stored in said second temporary database (10).

5. The system (100) according to one of the preceding claims, wherein said authorization means (7) comprises a second timer (12) for counting the time duration of the active connection sessions of the user (U1) to the target server (TS).

6. The system (100) according to one of the preceding claims, wherein the transmission of said IP address of the user (U1) to said second server (B1) takes place by means of a channel protected by encryption.

7. A method for controlling the target server (TS) access by a user (U1) through internet network by means of a system (100) according to any of the preceding claims, comprising the steps of:
- providing first access credentials of the user (U1) to a first server (S1), said first server (S1) being not directly connected to the target server (TS);
- performing an authentication procedure of the user (U1) on the first server (S1) by entering the first access credentials of the user (U1);
- if the authentication procedure gives positive results, acquiring said IP address of the user (U1);
- sending said IP address to a second server (B1) which has an association of said first access credentials of the user (U1) to the target server (TS), said second server (B1) being not directly connected to the target server (TS);
- making available said IP address to authorization means (7) of the access to the target server (TS), said authorization means (7) being connected directly to the target server (TS);
- storing, for a predetermined time interval (AT), said IP in a second temporary database (10) of IP addresses authorized to access the target server (TS);
- authorizing to access the target server (TS) by IP addresses stored in the second temporary database (10), during said predetermined time interval (AT) wherein said IP addresses are stored in said second temporary database (10),
wherein said first server (S1) and second server (B1) are physically and logically separated with respect to target server (TS),
wherein the second server (B1) is interposed between the first server (S1) and said authorization means (7), so that said first server (S1) is not directly connected with the target server (TS),
and wherein said authorization means (7) physically lies in another additional server.

8. The method according to claim 7, wherein said predetermined time interval (AT) is comprised between 10 and 30 seconds and however it can be configured.

9. The method according to claim 7 or 8, wherein the authorization to access the target server (TS) is maintained for the already active sessions after cancellation of IP addresses of the users which have been authorized from the second temporary database (10).

## Patentansprüche

1. System (100) zum Steuern des Zugriffs auf einen oder mehrere Zielserver (TS) durch einen oder mehrere Benutzer (U1) über ein Internetnetzwerk, umfassend:
- einen ersten Server (S1), der konfiguriert ist, um einem Benutzer (U1) zu ermöglichen, erste Zugriffsanmeldedaten einzugeben, und umfassend:
i. eine erste Datenbank (3) von ersten Zugriffsanmeldedaten von Benutzern (U1), die autorisiert sind, auf den ersten Server (S1) zuzugreifen;
ii. Mittel (4) zum Erfassen einer IP-Adresse, das zum Erfassen einer IP-Adresse programmiert ist, von der aus der Benutzer (U1) verbunden ist, falls die ersten Zugriffsanmeldedaten, die durch den Benutzer (U1) eingegeben werden, den ersten Zugriffsanmeldedaten entsprechen, die in der ersten Datenbank (3) gespeichert sind;
iii. Übertragungsmittel (5), das zum Übertragen von Daten einschließlich der IP-Adresse an einen zweiten Server (B1) programmiert ist;
der zweite Server (B1), der mit dem ersten Server (S1) verbunden ist, umfassend Empfangs- und Übertragungsmittel (6), die geeignet sind, um von dem ersten Server (S1) die IP-Adresse zu empfangen, die erfasst wurde, und die IP-Adresse automatisch einem jeweiligen Autorisierungsmittel (7) zur Verfügung zu stellen;
wobei das Autorisierungsmittel (7) mit einem jeweiligen Zielserver (TS) verbunden und programmiert ist zum:
• automatischen Speichern der IP-Adresse, die durch den zweiten Server (B1) zur Verfügung gestellt wird, in einer zweiten temporären Datenbank (10), und
• Löschen der IP-Adresse aus der zweiten temporären Datenbank 10 nach einem vorbestimmten Zeitintervall (AT),
wobei das Autorisierungsmittel (7) ferner zum Autorisieren ausschließlich von Zugriffsanfragen an den jeweiligen Zielserver (TS) programmiert ist, die von IP-Adressen kommen, die in der zweiten temporären Datenbank (10) gespeichert sind, und ausschließlich während des vorbestimmten Zeitintervalls (AT), wobei die IP-Adressen in der zweiten temporären Datenbank (10) gespeichert sind,
wobei der erste Server (S1) und der zweite Server (B1) in Bezug auf den Zielserver (TS) physisch und logisch getrennt sind,
wobei der zweite Server (B1) zwischen dem ersten Server (S1) und dem Autorisierungsmittel (7) angeordnet ist, sodass der erste Server (S1) nicht direkt mit dem Zielserver (TS) verbunden ist,
wobei das Autorisierungsmittel (7) physisch in einem anderen zusätzlichen Server liegt.

2. System (100) nach Anspruch 1, wobei das Autorisierungsmittel (7) konfiguriert ist, sodass, wenn das vorbestimmte Zeitintervall abläuft, falls eine Verbindung, die durch den Benutzer (U1) hergestellt wird, der autorisiert ist, um auf den Zielserver (TS) zuzugreifen, mit einem jeweiligen Zielserver (TS) andauert, die Verbindung automatisch aktiv gehalten wird, während die IP-Adresse dieses Benutzers (U1) aus der zweiten temporären Datenbank (10) gelöscht wird.

3. System (100) nach einem der vorstehenden Ansprüche, wobei das vorbestimmte Zeitintervall (AT) zwischen 10 und 30 Sekunden liegt und jedoch konfiguriert werden kann.

4. System (100) nach dem vorstehenden Anspruch, wobei das Autorisierungsmittel (7) einen ersten Zeitgeber (11) zum Zählen des vorbestimmten Zeitintervalls (AT) umfasst, wobei die IP-Adressen in der zweiten temporären Datenbank (10) gespeichert sind.

5. System (100) nach einem der vorstehenden Ansprüche, wobei das Autorisierungsmittel (7) einen zweiten Zeitgeber (12) zum Zählen der Zeitdauer der aktiven Verbindungssitzungen des Benutzers (U1) mit dem Zielserver (TS) umfasst.

6. System (100) nach einem der vorstehenden Ansprüche, wobei die Übertragung der IP-Adresse des Benutzers (U1) an den zweiten Server (B1) mittels eines Kanals erfolgt, der durch Verschlüsselung geschützt ist.

7. Verfahren zum Steuern des Zugriffs auf den Zielserver (TS) durch einen Benutzer (U1) über ein Internetnetzwerk mittels eines Systems (100) nach einem der vorstehenden Ansprüche, umfassend die Schritte:
- Bereitstellen erster Zugriffsanmeldedaten des Benutzers (U1) an einen ersten Server (S1), wobei der erste Server (S1) nicht direkt mit dem Zielserver (TS) verbunden ist;
- Durchführen eines Authentifizierungsvorgangs des Benutzers (U1) auf dem ersten Server (S1) durch das Eingeben der ersten Zugriffsanmeldedaten des Benutzers (U1);
- falls der Authentifizierungsvorgang positive Ergebnisse liefert, Erfassen der IP-Adresse des Benutzers (U1);
- Senden der IP-Adresse an einen zweiten Server (B1), der eine Zuordnung der ersten Zugriffsanmeldedaten des Benutzers (U1) zu dem Zielserver (TS) aufweist, wobei der zweite Server (B1) nicht direkt mit dem Zielserver (TS) verbunden ist;
- zur Verfügung stellen der IP-Adresse an das Autorisierungsmittel (7) des Zugriffs auf den Zielserver (TS), wobei das Autorisierungsmittel (7) direkt mit dem Zielserver (TS) verbunden ist;
- Speichern, für ein vorbestimmtes Zeitintervall (AT), der IP in einer zweiten temporären Datenbank (10) von IP-Adressen, die autorisiert sind, auf den Zielserver (TS) zuzugreifen;
- Autorisieren, auf den Zielserver (TS) durch IP-Adressen zuzugreifen, die in der zweiten temporären Datenbank (10) gespeichert sind, während des vorbestimmten Zeitintervalls (AT), wobei die IP-Adressen in der zweiten temporären Datenbank (10) gespeichert sind,
wobei der erste Server (S1) und der zweite Server (B1) in Bezug auf den Zielserver (TS) physisch und logisch getrennt sind,
wobei der zweite Server (B1) zwischen dem ersten Server (S1) und dem Autorisierungsmittel (7) angeordnet ist, sodass der erste Server (S1) nicht direkt mit dem Zielserver (TS) verbunden ist, und wobei das Autorisierungsmittel (7) physisch in einem anderen zusätzlichen Server liegt.

8. Verfahren nach Anspruch 7, wobei das vorbestimmte Zeitintervall (AT) zwischen 10 und 30 Sekunden liegt und jedoch konfiguriert werden kann.

9. Verfahren nach Anspruch 7 oder 8, wobei die Autorisierung, auf den Zielserver (TS) zuzugreifen, für die bereits aktiven Sitzungen nach Löschung von IP-Adressen der Benutzer, die autorisiert wurden, aus der zweiten temporären Datenbank (10) aufrechterhalten wird.

## Revendications

1. Système (100) permettant de contrôler l'accès à un ou plusieurs serveurs cibles (TS) par un ou plusieurs utilisateurs (U1) par le biais du réseau Internet, comprenant :
- un premier serveur (S1), configuré pour permettre à un utilisateur (U1) d'entrer des premiers identifiants d'accès et comprenant :
i. une première base de données (3) de premiers identifiants d'accès d'utilisateurs (U1) autorisés à accéder audit premier serveur (S1) ;
ii. des moyens (4) d'acquisition d'une adresse IP, programmés pour acquérir une adresse IP depuis laquelle l'utilisateur (U1) est connecté si les premiers identifiants d'accès saisis par l'utilisateur (U1) correspondent auxdits premiers identifiants d'accès stockés dans ladite première base de données (3) ;
iii. des moyens de transmission (5), programmés pour transmettre des données comportant ladite adresse IP à un second serveur (B1) ;
ledit second serveur (B1), connecté audit premier serveur (S1), comprenant des moyens de réception et de transmission (6) aptes à recevoir dudit premier serveur (S1) l'adresse IP qui a été acquise et à mettre automatiquement ladite adresse IP à la disposition de moyens d'autorisation (7) respectifs ;
ledit moyen d'autorisation (7) étant connecté à un serveur cible (TS) respectif et programmé pour :
• stocker automatiquement ladite adresse IP rendue disponible par ledit second serveur (B1) dans une seconde base de données temporaire (10), et
• supprimer ladite adresse IP de ladite seconde base de données temporaire 10 après un intervalle de temps prédéterminé (AT),
dans lequel ledit moyen d'autorisation (7) est en outre programmé pour autoriser exclusivement des requêtes d'accès au serveur cible (TS) respectif provenant d'adresses IP stockées dans ladite seconde base de données temporaire (10), et exclusivement pendant ledit intervalle de temps prédéterminé (AT) dans lequel lesdites adresses IP sont stockées dans ladite seconde base de données temporaire (10),
dans lequel ledit premier serveur (S1) et ledit second serveur (B1) sont séparés physiquement et logiquement par rapport au serveur cible (TS),
dans lequel le second serveur (B1) est interposé entre le premier serveur (S1) et ledit moyen d'autorisation (7), de sorte que ledit premier serveur (S1) n'est pas directement connecté au serveur cible (TS),
dans lequel ledit moyen d'autorisation (7) se trouve physiquement dans un autre serveur supplémentaire.

2. Système (100) selon la revendication 1, dans lequel ledit moyen d'autorisation (7) est configuré de sorte que, lorsque ledit intervalle de temps prédéterminé expire, si une connexion établie par l'utilisateur (U1) autorisé à accéder au serveur cible (TS) avec un serveur cible (TS) respectif est en cours, la connexion est automatiquement maintenue active, tandis que ladite adresse IP de cet utilisateur (U1) est supprimée de ladite seconde base de données temporaire (10).

3. Système (100) selon l'une des revendications précédentes, dans lequel ledit intervalle de temps prédéterminé (AT) est compris entre 10 et 30 secondes et peut toutefois être configuré.

4. Système (100) selon la revendication précédente, dans lequel ledit moyen d'autorisation (7) comprend un premier temporisateur (11) pour compter ledit intervalle de temps prédéterminé (AT) dans lequel lesdites adresses IP sont stockées dans ladite seconde base de données temporaire (10).

5. Système (100) selon l'une des revendications précédentes, dans lequel ledit moyen d'autorisation (7) comprend un second temporisateur (12) pour compter la durée des sessions de connexion actives de l'utilisateur (U1) au serveur cible (TS).

6. Système (100) selon l'une des revendications précédentes, dans lequel la transmission de ladite adresse IP de l'utilisateur (U1) audit second serveur (B1) s'effectue au moyen d'un canal protégé par chiffrement.

7. Procédé de contrôle de l'accès au serveur cible (TS) par un utilisateur (U1) par le biais du réseau Internet au moyen d'un système (100) selon l'une quelconque des revendications précédentes, comprenant les étapes consistant à :
- fournir de premiers identifiants d'accès de l'utilisateur (U1) à un premier serveur (S1), ledit premier serveur (S1) n'étant pas directement connecté au serveur cible (TS) ;
- exécuter une procédure d'authentification de l'utilisateur (U1) sur le premier serveur (S1) par la saisie des premiers identifiants d'accès de l'utilisateur (U1) ;
- si la procédure d'authentification donne des résultats positifs, acquérir ladite adresse IP de l'utilisateur (U1) ;
- envoyer ladite adresse IP à un second serveur (B1) qui possède une association desdits premiers identifiants d'accès de l'utilisateur (U1) au serveur cible (TS), ledit second serveur (B1) n'étant pas directement connecté au serveur cible (TS) ;
- mettre ladite adresse IP à la disposition de moyens d'autorisation (7) de l'accès au serveur cible (TS), lesdits moyens d'autorisation (7) étant connectés directement au serveur cible (TS) ;
- stocker, pendant un intervalle de temps prédéterminé (AT), ladite IP dans une seconde base de données temporaire (10) d'adresses IP autorisées à accéder au serveur cible (TS) ;
- autoriser l'accès au serveur cible (TS) par des adresses IP stockées dans la seconde base de données temporaire (10), pendant ledit intervalle de temps prédéterminé (AT) dans lequel lesdites adresses IP sont stockées dans ladite seconde base de données temporaire (10),
dans lequel ledit premier serveur (S1) et ledit second serveur (B1) sont séparés physiquement et logiquement par rapport au serveur cible (TS),
dans lequel le second serveur (B1) est interposé entre le premier serveur (S1) et ledit moyen d'autorisation (7), de sorte que ledit premier serveur (S1) n'est pas directement connecté au serveur cible (TS),
et dans lequel ledit moyen d'autorisation (7) se trouve physiquement dans un autre serveur supplémentaire.

8. Procédé selon la revendication 7, dans lequel ledit intervalle de temps prédéterminé (AT) est compris entre 10 et 30 secondes et peut toutefois être configuré.

9. Procédé selon la revendication 7 ou 8, dans lequel l'autorisation d'accès au serveur cible (TS) est maintenue pour les sessions déjà actives après l'annulation des adresses IP des utilisateurs qui ont été autorisés à partir de la seconde base de données temporaire (10).
